# EUROPÄISCHE PATENTSCHRIFT

(11) **EP 2 713 305 B1**
(45) Veröffentlichungstag und Bekanntmachung des Hinweises auf die Patenterteilung: **02.08.2017**
(21) Anmeldenummer: 12186214.8
(22) Anmeldetag: 27.09.2012
(51) Int. Cl.: G06K 7/10

(54) **Verfahren und Schreib-/Lesegerät zur Konfigurierung eines Schreib-/Lesegerätes in einer RFID-Anordnung**
Method and read/write device for configuring a write/reader in an RFID assembly
Procédé et appareil d'écriture/de lecture pour la configuration d'un appareil d'écriture/de lecture dans un agencement RFID

(43) Veröffentlichungstag der Anmeldung: 02.04.2014
(73) Patentinhaber: Siemens Aktiengesellschaft, 80333 München (DE)
(72) Erfinder: Horst, Dieter, 90556 Cadolzburg (DE); Neidig, Jörg, Dr., 90403 Nürnberg (DE)

(56) Entgegenhaltungen:
- US-A1- 2007 046 467
- US-A1- 2008 074 263
- US-A1- 2011 037 573

## Beschreibung

Die Erfindung betrifft ein Verfahren zur Konfigurierung eines Schreib-/Lesegerätes in einer RFID-Anordnung gemäß dem Oberbegriff des Patentanspruchs 1, und ein Schreib-/Lesegerät für eine RFID-Anordnung gemäß dem Oberbegriff des Patentanspruchs 12.

Schreib-/Lesegeräte für RFID-Anordnungen, insbesondere solche, die im Bereich um 900 MHz (UHF-Bereich) arbeiten, verfügen im Wesentlichen über 2 Kommunikationsschnittstellen, nämlich zum einen eine Systemschnittstelle zu einem Host-Computer (speicherprogrammierbare Steuerung, Personal-Computer oder sonstiges übergeordnetes System), und eine "Luftschnittstelle" ("Air Interface") zur Kommunikation mit RFID-Transpondern. Dabei sind die Schreib-/Lesegeräte meist so konzipiert, dass sie Kommandos von einem Host-Computer ausführen, wobei sie mit den RFID-Transpondern über die Luftschnittstelle kommunizieren und dabei entsprechende Nutzdaten (Payload) austauschen.

In Anordnungen mit mehreren Schreib-/Lesegeräten ist es häufig erforderlich, dass diese hinsichtlich ihrer jeweiligen Konfiguration aufeinander abgestimmt werden. Dies bedeutet, dass die Betriebsparameter der Schreib-/Lesegeräte jeweils derart eingestellt werden müssen, dass eine gegenseitige ungewollte Beeinflussung oder gegenseitige Störung unterbleibt, wobei jedoch sichergestellt sein muss, dass sich in Summe eine ausreichende Funkabdeckung ergibt und die zu erfassenden RFID-Transponder mit einer hinreichenden Qualität (Erfassungsrate, Sende- und Empfangsleistungen etc.) erfasst werden.

Zur Konfiguration der Schreib-/Lesegeräte ist es üblich, diese mittels ihrer Host-Schnittstellen mit einem Programmiergerät oder dgl. zu verbinden. In dem häufigen Anwendungsfall, bei dem die Host-Schnittstellen der Schreib-/Lesegeräte an einem (ggf. industriellen) Datennetz angeschlossen sind, kann an demselben Datennetz ein Programmiergerät o.ä. angeschlossen sein, welches wechselweise oder sogar gleichzeitig auf die Betriebsparameter (Parameter-Sätze oder Konfigurations-Datei) zugreift und einem Benutzer gestattet, die Werte der Betriebsparameter wunschgemäß einzustellen.

Aus der Druckschrift US 2007/0046467 A1 - Chakraborty et al. "System and Method for RFID Reader to Reader Communication" ist bereits ein Ansatz bekannt, bei dem mehrere RFID-Schreib-/Lesegeräte derart aufeinander abgestimmt werden, dass zur selben Zeit immer nur ein Schreib-/Lesegerät senden darf, während alle anderen Schreib-/Lesegeräte sich im Empfangsmodus befinden. Dabei ist ein Programmiergerät "Central Authoritative Source" vorgesehen, wobei die Konfigurierungs-Nachrichten von diesem zentralen Programmiergerät an eines der Schreib-/Lesegeräte übermittelt und von diesem direkt zum nächsten Schreib-/Lesegerät weitergeleitet werden, usw.

Die Druckschrift US 2008/0074263A1 - Rofougaran "RFID System with peer-to-peer communication" zeigt eine Anordnung, bei der Schreib-/Lesegeräte als Repeater für RFID-Nachrichten eingesetzt werden.

Ausgehend vom Stand der Technik ergibt sich die Aufgabe, die Konfigurierung von Schreib-/Lesegeräten in RFID-Anordnungen zu vereinfachen und dabei insbesondere die für die Konfigurierung benötigten Einrichtungen zu verringern oder einzusparen.

Es ist eine Kernidee der Lösung der Aufgabe, dass die RFID-Schreib-/Lesegeräte die Konfigurierung im Verbund miteinander selbst vornehmen, wobei die dazu notwendigen Nachrichten direkt über die Luftschnittstelle, und zwar unter Verwendung des RFID-Protokolls, ausgetauscht werden.

Die Lösung der Aufgabe sieht insbesondere den Einsatz eines Verfahrens gemäß dem Patentanspruch 1 vor, wobei ein Verfahren zur Konfigurierung eines Schreib-/Lesegerätes in einer RFID-Anordnung mit zumindest zwei Schreib-/Lesegeräten vorgesehen wird, wobei zur Konfigurierung in zumindest einem der Schreib-/Lesegeräte zumindest ein Betriebsparameter angepasst wird, und wobei zwischen den zumindest zwei Schreib-/Lesegeräten ein direkter Austausch von auf die Konfiguration bezogenen Nachrichten erfolgt. Dabei werden zum Austausch der Nachrichten die jeweils für eine Kommunikation der Schreib-/Lesegeräte mit RFID-Transpondern eingerichteten drahtlosen Schnittstellen und die für die Kommunikation mit RFID-Transpondern vorgesehenen Kommunikationsverfahren und Kommunikationsprotokolle verwendet, wobei zumindest eines der Schreib-/Lesegeräte gegenüber einem anderen der Schreib-/Lesegeräte einen RFID-Transponder simuliert. Durch ein solches Verfahren können Schreib-/Lesegeräte im Verbund aufeinander abgestimmt konfiguriert werden, ohne dass eine Kommunikation über die Host-Interfaces notwendig ist und ohne dass separate Hardware-Einrichtungen oder separate Datenverbindungen zwischen den Schreib-/Lesegeräten notwendig sind. Außerdem können auch solche Schreib-/Lesegeräte im Verbund miteinander konfiguriert werden, die über keine Host-Schnittstelle verfügen bzw. nicht an einem Datennetzwerk angeschlossen sind (z.B. Stand-Alone-Geräte).

Die Aufgabe wird außerdem durch ein Schreib-/Lesegerät gemäß dem Patentanspruch 12 gelöst, wobei ein Schreib-/Lesegerät für eine RFID-Anordnung vorgeschlagen wird, wobei das Schreib-/Lesegerät zum Austausch auf eine Konfigurierung eines Schreib-/Lesegerätes bezogene Nachrichten mit einem weiteren Schreib-/Lesegerät der RFID-Anordnung eingerichtet ist. Dabei ist das Schreib-/Lesegerät zum Austausch der Nachrichten mittels einer für die Kommunikation mit RFID-Transpondern eingerichteten drahtlosen Schnittstelle unter Verwendung der für eine Kommunikation mit RFID-Transpondern vorgesehenen Kommunikations-Verfahren und Kommunikationsprotokolle eingerichtet, wobei das Schreib-/Lesegerät zur Simulation eines RFID-Transponders gegenüber dem weiteren der Schreib-/Lesegeräte ausgebildet ist. Durch ein solches Schreib-/Lesegerät können die Vorteile realisiert werden, die bereits im Zusammenhang mit dem erfindungsgemäßen Verfahren diskutiert wurden.

Vorteilhafte Ausgestaltungen des erfindungsgemäßen Verfahrens sind in den abhängigen Patentansprüchen 2 bis 11 angegeben, wobei deren Merkmale und Vorteile sinngemäß auch für das erfindungsgemäße Schreib-/Lesegerät gelten; umgekehrt gelten die Merkmale und Vorteile der vorteilhaften Ausgestaltung des Schreib-/Lesegerätes aus dem abhängigen Patentanspruch 13 sinngemäß auch für das erfindungsgemäße Verfahren. Die in den abhängigen Patentansprüchen dargelegten Merkmale können sowohl einzelnd, als auch in Kombination miteinander realisiert werden.

In einer vorteilhaften Ausgestaltung beziehen sich die für die Konfiguration ausgetauschten Nachrichten auf die an einem Standort bzw. durch eines der Schreib-/Lesegeräte erfassten RFID-Transponder und die bei deren Erfassung gemessenen Funk-Parameter, insbesondere Empfangsfeldstärke (RSSI-Wert), Leserate etc. In einem Schreib-/Lesegerät, welches diese Daten empfängt, können diese Daten zur Entscheidung über Änderungen von Betriebsparametern oder für andere Einstellungen herangezogen werden, wobei vorteilhafter Weise zum Vergleich lokal gewonnene Daten über die lokal empfangenen Transponder herangezogen werden können. Damit ist es beispielsweise möglich, dasjenige Schreib-/Lesegerät zur Verarbeitung der Daten eines erfassten Transponders zu betrauen, bei dem der Transponder mit der besten Qualität empfangen wurde. Dazu ist es möglich, die anderen Schreib-/Lesegeräte mittels Nachrichten über die Luftschnittstellen darüber zu informieren, dass diese den bewussten Transponder für die laufende Arbeitsperiode ignorieren können, oder dgl. In diesem Fall betreffen die geänderten Betriebsparameter also die zu ignorierenden Transponder.

In einer weiteren vorteilhaften Ausgestaltung, die alternativ oder zusätzlich zu den anderen hier beschriebenen Verfahren und Vorrichtungen realisiert sein kann, erfassen die Schreib-/Lesegeräte die Aussendungen benachbarter Schreib-/Lesegeräte und verwenden die dabei festgestellten bzw. gemessenen Funkparameter, also beispielsweise die Empfangsqualität oder Feldstärken etc., um durch eine geeignete Anpassung der Sendeleistungen, Funkkanäle, Zeitschlitze etc. eine optimale Funkabdeckung der Gesamtanordnung zu erreichen. Dabei kann beispielsweise eines der Schreib-/Lesegeräte im Funkverbund als "Master" zur Steuerung bzw. Konfigurierung der anderen Schreib-/Lesegeräte bestimmt werden. Diese "Master"-Funktion kann auch fallweise ein anderes der Schreib-/Lesegeräte übernehmen; insbesondere sind Hierarchien oder Algorithmen denkbar, die ein "Aushandeln" der Master-Funktionalität gestatten. In einer alternativen Ausführungsform kann aber auch jedes Schreib-/Lesegerät anhand der Daten, die es selbst erfasst, und anhand von Daten, die das Schreib-/Lesegerät von benachbarten Schreib-/Lesegeräten erhält, die eigenen Funkparameter bestimmen bzw. optimieren. Vorteilhaft kann in jedem Schreib-/Lesegerät eine Information oder Liste darüber administriert sein, bei welchen benachbarten Schreib-/Lesegeräten eine Aussendung, beispielsweise ein Erfassungssignal ("Inventory"), mit welcher Mindest- und/oder Maximalstärke empfangbar sein muss. Alternativ kann ein Schreib-/Lesegerät auch Betriebsparameter für andere Schreib-/Lesegeräte des Verbundes ermitteln, zu diesem übertragen und somit das Verhalten benachbarter Funkzellen bestimmen.

Als anzupassende Betriebsparameter kommen beispielsweise eine maximale oder eine derzeit (zukünftig) zu verwendende Sendeleistung, ein zu verwendender oder ein zu sperrender Funkkanal, eine zu verwendende Eingangsempfindlichkeit der Empfangselektronik oder auch Timing-Parameter in Frage. Weitere Betriebsparameter können das zu verwendende Kommunikationsprotokoll näher spezifizieren, was sowohl das für den operativen Betrieb verwendete Protokoll zum Lesen und Schreiben der RFID-Transponder betrifft, als auch das zur Kommunikation mit anderen Schreib-/Lesegeräten zu verwendende RFID-Kommunikationsprotokoll. Weitere anzupassende Betriebsparameter können Filterparameter zur Selektion oder Verwerfung erfasster RFID-Transponder betreffen. Dies bedeutet, dass beispielsweise mittels der Nachrichten bestimmt wird, welches der Schreib-/Lesegeräte welche RFID-Transponder "verarbeitet", wobei auch Gruppen oder Identifizierungsnummern-Bereiche spezifiziert werden können.

Ein weiterer vorteilhafter Einsatzfall ergibt sich, wenn Schreib-/Lesegeräte die erfassten Transponder über die Funkschnittstelle an benachbarte Schreib-/Lesegeräte weitermelden, wobei dort die Informationen über die Erfassung dieser Transponder und ggf. erfasste Nutzdaten (Payload) weiterverarbeitet werden oder über einer Host-Schnittstelle an eine Anwendung gemeldet werden. Dabei ist es beispielsweise möglich, auch solche RFID-Schreib-/Lesegeräte in eine industrielle Anordnung zu integrieren, die keine eigene Host-Schnittstelle aufweisen oder bei denen die Anbindung an eine Netzwerk-Infrastruktur schwierig oder nicht möglich ist. Neben den Identifizierungsnummern der erfassten Transponder und der ggf. vorhandenen Daten-Information (Payload) kann dabei vorteilhaft auch die Identifizierungsnummer oder andere Angaben über die des erfassenden Schreib-/Lesegerätes gemeldet werden, so dass beispielsweise Rückschlüsse auf den Ort der Erfassung gezogen werden können.

Schließlich ist es erfindungsgemäß in einer vorteilhaften Ausgestaltung möglich, mittels der Kommunikation über die Luftschnittstellen Konfigurierungsdaten von einem Schreib-/Lesegerät zum anderen zu übertragen und dort anzuwenden, was vorteilhaft bei der Installation von großen Netzwerken zur Arbeitserleichterung eingesetzt werden kann, indem identisch konfigurierte Geräte bereitgestellt werden können. Ein weiterer sinnvoller Einsatzfall entsteht dort, wo ein vorhandenes Schreib-/Lesegerät gegen ein anderes ausgetauscht werden soll, beispielsweise zu Wartungszwecken. Auch hier kann eine manuelle Neu-Konfigurierung des neu eingesetzten Gerätes erheblich vereinfacht oder sogar ganz eingespart werden.

Vorteilhaft kommunizieren die Schreib-/Lesegeräte mittels der modulierten Rückstreuung ("Backscattern") miteinander, wobei je nach "Richtung" der Nachrichten-Übertragung die Rolle desjenigen Schreib-/Lesegerätes, welches einen RFID-Transponder simuliert, wechseln kann.

Ausführungsbeispiele des erfindungsgemäßen Verfahrens werden nachfolgend anhand der Zeichnungen erläutert. Sie dienen gleichzeitig der Erläuterung von Ausführungsbeispielen eines erfindungsgemäßen Schreib-/Lesegerätes.

Dabei zeigen:
- Figur 1: in schematischer Darstellung eine Anordnung aus vier Schreib-/Lesegeräten und einem RFID-Transponder,
- Figur 2: eine Anordnung aus zwei Schreib-/Lesegeräten, einem Computer mit einer Anwendung und einem RFID-Transponder, und
- Figur 3: in einer schematischen Darstellung eine Anordnung aus zwei Schreib-/Lesegeräten und einem Administrierungs-Arbeitsplatz.

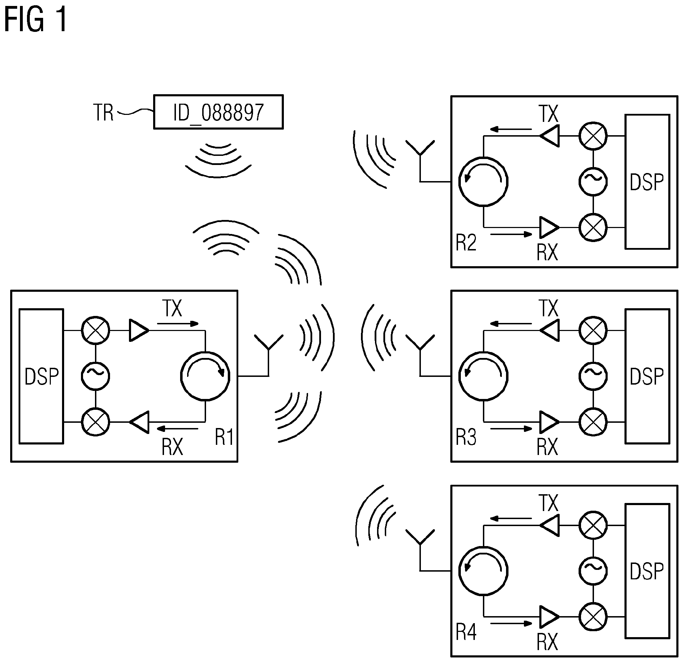

In der Figur 1 sind schematisch vier Schreib-/Lesegeräte R1, R2, R3, R4 dargestellt, die jeweils über einen Sende- und Empfangspfad TX, RX verfügen und mit einem Signalprozessor DSP ausgerüstet sind. Weiter ist in der Figur ein RFID-Transponder TR abgebildet. Sowohl der RFID-Transponder TR als auch die Schreib-/Lesegeräte R1, R2, R3, R4 weisen eindeutige Identifizierungsnummern auf, im Beispiel hat der RFID-Transponder TR die Identifizierungsnummer ID_088897.

In der Figur 1 ist dargestellt, dass die Schreib-/Lesegeräte R1, R2, R3, R4 sowohl den RFID-Transponder TR erfassen bzw. mit diesem Daten austauschen können, als auch untereinander mittels derselben Luftschnittstellen (Antennen, Empfangsschaltkreise etc.) Nachrichten oder Daten austauschen können. Dabei kann auf eine Abfragemeldung ("Inventory") eines Schreib-/Lesegerätes R1, R2, R3, R4 nicht nur der Transponder TR mittels modulierter Rückstreuung (Backscattern) antworten, sondern auch die anderen Schreib-/Lesegeräte R1, R2, R3, R4. Neben den Identifizierungsnummern ("ID's") können dabei auch Nutzinhalte übertragen werden, also beispielsweise bei dem Transponder TR der Inhalt eines Datenspeichers, und bei den anderen Schreib-/Lesegeräten R1, R2, R3, R4 eine beliebige Nachricht.

Als Beispiel sei angenommen, dass die Schreib-/Lesegeräte R1, R2, R3, R4 in einer industriellen Umgebung verteilt sind, um einen größeren Funkbereich lückenlos abzudecken. Dazu soll die Sendeleistung jedes Schreib-/Lesegerätes so hoch eingestellt werden soll, dass eine von diesem Schreib-/Lesegerät abgestrahlte modulierte Trägerwelle noch mit einer Mindest-Empfangsfeldstärke bei allen anderen Schreib-/Lesegeräten R1, R2, R3, R4 empfangen werden soll. Andererseits soll die Sendeleistung jedes Schreib-/Lesegerätes R1, R2, R3, R4 so gering wie möglich eingestellt werden, um gegenseitige Störungen auszuschließen. Dazu kann jedes der Schreib-/Lesegeräte R1, R2, R3, R4 jeweils eine als "Testsignal" gekennzeichnete Übertragung starten, wobei die anderen Schreib-/Lesegeräte R1, R2, R3, R4 nicht nur ihre jeweilige Identifizierungsnummer "zurückstreuen" (Backscattern), sondern auch einen Wert für die lokal gemessene Empfangsfeldstärke des von dem erstgenannten Schreib-/Lesegerät R1, R2, R3, R4 emittierten Funksignals. Die Identifizierungsnummern der antwortenden Schreib-/Lesegeräte R1, R2, R3, R4 und die zugehörigen Feldstärke-Werte für die Empfangsfeldstärken (RSSI-Werte) stellen also Nachrichten dar, die über das Luft-Interface des erstgenannten Schreib-/Lesegerätes R1, R2, R3, R4 empfangen werden, wonach diese Daten lokal ausgewertet und zur Einstellung der Sendeleistung verwendet werden können. Dieses Verfahren kann von allen Schreib-/Lesegeräten R1, R2, R3, R4 nacheinander durchgeführt werden, was zu einer einfachen, aber aufeinander abgestimmten Konfigurierung von Betriebsparametern (hier: Sendeleistung) der beteiligten Geräte führt. Neben der Sendeleistung sind natürlich zahlreiche andere Betriebsparameter einstellbar, wobei auch in den einzelnen Schreib-/Lesegeräten R1, R2, R3, R4 unterschiedliche Algorithmen für unterschiedliche Betriebsanforderungen zur Bestimmung der Betriebsparameter anhand der empfangenen Nachrichten eingesetzt werden können.

Alternativ zu dem hier vorgestellten Verfahren, bei dem jedes Schreib-/Lesegerät R1, R2, R3, R4 seine eigenen Parameter berechnet und anwendet, kann auch von einem Schreib-/Lesegerät R1, R2, R3, R4 ein Anweisung an ein anderes der Geräte gehen, mit der diesem zweiten Gerät eine Parameter-Anpassung vorgeschlagen oder vorgeschrieben wird.

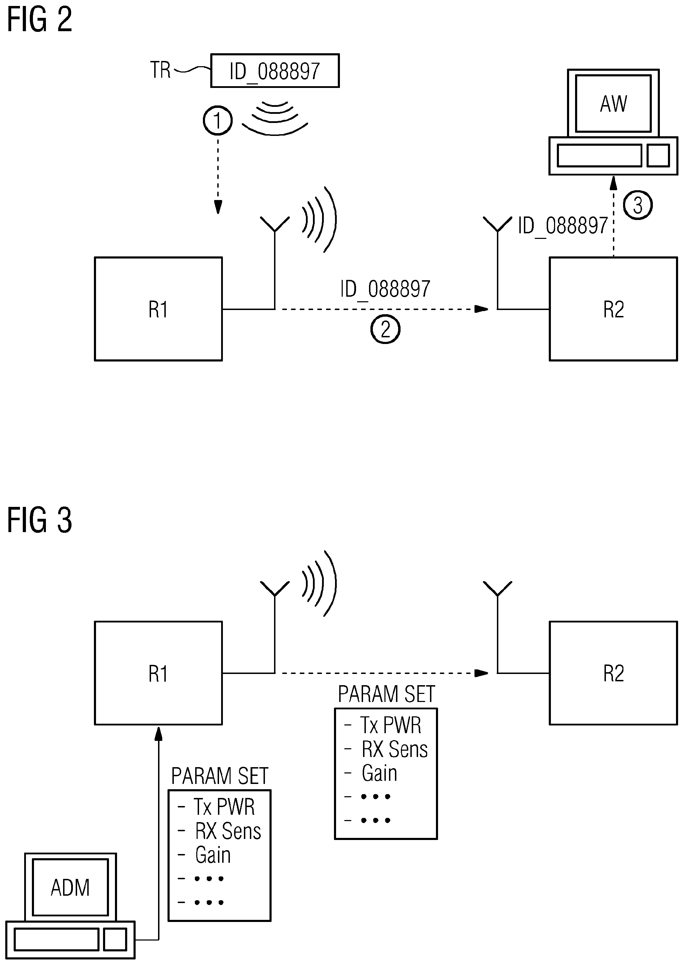

In der Figur 2 ist schematisch eine Darstellung aus zwei Schreib-/Lesegeräten R1, R2, einem RFID-Transponder TR und einem Personal-Computer mit einer Anwendung AW dargestellt. Die Anwendung AW ist beispielsweise ein industrielles Steuerungsprogramm, welches über erfasste RFID-Transponder TR informiert werden muss. Zu diesem Zweck ist der Personal-Computer mit der Anwendung AW an eine Host-Schnittstelle des Schreib-/Lesegerätes R2 angebunden, beispielsweise über eine USB-Schnittstelle oder eine Netzwerkverbindung. Ein von dem Schreib-/Lesegerät R1 erfasster RFID-Transponder TR, der sich nicht in der Empfangsreichweite des Schreib-/Lesegerätes R2 befindet, wird mittels einer Übertragung über die Luftschnittstelle von dem Schreib-/Lesegerät R1 zu dem Schreib-/Lesegerät R2 gemeldet. Dazu startet das Schreib-/Lesegerät R1 ein erneutes "Inventory", wobei in der modulierten Trägerwelle eine Signalisierung darüber enthalten ist, dass eine Nachricht für das Schreib-/Lesegerät R2 vorliegt. Diese Aussendung wird von dem Schreib-/Lesegerät R2 empfangen und demoduliert, wonach dieses Gerät in einen "Antwort-Modus" umschaltet und analog zu einem RFID-Transponder, also in einem Simulations-Modus, dem Schreib-/Lesegerät R1 seine Anwesenheit meldet. Analog zu dem Verfahren, mit dem ein Schreib-/Lesegerät Daten zu einem Anwenderspeicher eines RFID-Transponders übermittelt, übermittelt nun das Schreib-/Lesegerät R1 die Seriennummer und den Nutzdateninhalt des RFID-Transponders TR, eine Zeitinformation über den Erfassungszeitpunkt und statistische Daten (beispielsweise Signal/Rauschabstand, Timing-Parameter, Feldstärken), die bei der Erfassung des RFID-Transponders TR registriert wurden. Diese Informationen werden, je nach Anforderungen im konkreten Anwendungsfall, von dem Schreib-/Lesegerät R2 an die Anwendung AW gemeldet. In einer einfachen Ausführungsform wird die Erfassung des RFID-Transponders TR dabei in der gleichen Weise gemeldet, als hätte das Schreib-/Lesegerät R2 diesen Transponder TR selbst erfasst. In einer alternativen Ausführungsform können jedoch auch Zusatzinformationen übermittelt werden, neben den o.g. Werten insbesondere auch darüber, dass der Transponder TR nicht am Ort bzw. dem Funkbereich des Schreib-/Lesegerätes R2 erfasst wurde, sondern von dem Schreib-/Lesegerät R1 bzw. am Ort des dortigen Funkbereichs.

Für den Fall, dass der Transponder TR bei beiden Schreib-/Lesegeräten R1, R2 erfasst wurde, kann in dem Schreib-/Lesegerät R2 ein Vergleich darüber stattfinden, an welchem Ort bzw. bei welchem Schreib-/Lesegerät R1, R2 der Transponder TR mit den "besseren" Empfangseigenschaften erfasst wurde. Dann kann beispielsweise als Ortsinformation über den wahrscheinlichen Aufenthaltsort des Transponders TR diejenige Funkzelle bzw. dasjenige Schreib-/Lesegerät R1, R2 angegeben werden, bei dem die "besseren" Empfangseigenschaften gegolten haben. In einem Fall, bei dem beide Schreib-/Lesegeräte R1, R2 über ein Host-Interface verfügen, kann mittels eines jeweiligen Vergleichs auch festgelegt werden, welches der Schreib-/Lesegeräte R1, R2 den erfassten Transponder TR weitermeldet bzw. verarbeitet. In einem einfachen Fall kann auch gelten, dass dasjenige Schreib-/Lesegerät R1, R2, bei dem der Transponder TR zuerst erfasst wurde, für die weitere Kommunikation mit diesem Transponder TR zuständig ist. Eine mit der Identifizierungsnummer ID_088897 versehene entsprechende Nachricht von dem Schreib-/Lesegerät R1 zu dem Schreib-/Lesegerät R2 würde dann dazu führen, dass das Schreib-/Lesegerät R2 den besagten Transponder TR fortan ignoriert. Die Informationen über erfasste oder zu ignorierende RFID-Transponder gelten dabei genauso als Betriebsparameter, wie auch die zuvor genannten Einstellwerte für Sendeleistung, Timing, Funkkanäle, Kommunikationsprotokolle etc.

In der Figur 3 ist wieder eine Anordnung aus zwei Schreib-/Lesegeräten R1, R2 dargestellt, wobei das Schreib-/Lesegerät R1 mit einem Administrator-Arbeitsplatz ADM verbunden ist. Dabei wird ein Datensatz mit Konfigurierungs-Informationen, also mit Betriebsparametern, an das Schreib-/Lesegerät R1 übertragen, welches diese Betriebsparameter über die Luftschnittstelle durch die bereits erwähnten Verfahren und Protokolle aus der RFID-Kommunikationstechnik an das zweite Schreib-/Lesegerät R2 überträgt, wonach diese Betriebsparameter dort angewendet werden.

In einer alternativen Ausführungsform können auch die Schreib-/Lesegeräte R1, R2 ihre Betriebsparameter miteinander abgleichen, ohne dass ein Administrator-Arbeitsplatz ADM verwendet werden muss.

Mit den dargestellten Anordnungen und den skizzierten Verfahren lassen sich also verschiedene Verwendungs-Szenarien realisieren. Im Rahmen eines automatischen "Kanal-Managements" sollen Schreib-/Lesegeräte R1, R2, R3, R4 autark, also ohne zwangsweise Einbindung eines sog. "Hosts", die Verwendung von Funkkanälen etc. regeln. Es ist nämlich ein bekanntes Problem, dass die wenigen (in Europa: vier) zur Verfügung stehenden Funkkanäle (UHF-Bereich) bei einer hohen Dichte an Schreib-/Lesegeräten R1, R2, R3, R4 stark ausgelastet sind. Die verwendeten Kanäle müssen also so gewählt werden, dass die Geräte sich nicht gegenseitig stören. In einem automatisierten Verfahren, bei dem die Schreib-/Lesegeräte R1, R2, R3, R4 über ihre Luftschnittstellen direkt miteinander kommunizieren, können sich die Geräte gegenseitig Informationen über ihre Sendeleistung und den Antennengewinn zusenden. Diese Werte bzw. die Nachrichten mit diesen Werten können von benachbarten Geräten empfangen werden, wobei eine Berechnung der Streckendämpfung (Path Loss) erfolgt. Durch die Kenntnis von Strahlungsleistung, Streckendämpfung/-verluste, Störschwelle etc. kann entschieden werden, ob auf dem gleichen Kanal störungsfrei gearbeitet werden kann oder nicht. In einem dritten Schritt wird also mit den benachbarten Geräten eine Kanalbelegung festgelegt, die sicher zum störungsfreien Betrieb der RFID-Anordnung führt. Ferner kann ein zentraler Arbeitsplatz oder ein "Host" informiert werden, falls beispielsweise aufgrund eines geringen Abstandes der Geräte zueinander oder aufgrund von Überreichweiten ein störungsfreier Betrieb nicht möglich ist. Die Messergebnisse der einzelnen Schreib-/Lesegeräte R1, R2, R3, R4 bei den "Testübertragungen" und auch im produktiven Betrieb können auch einem Anwender, beispielsweise mittels eines integrierten Webservers, zur Verfügung gestellt werden.

Ein weiteres Einsatzgebiet ist die gezielte Vermeidung von Überreichweiten. Gerade im industriellen Umfeld kann es aufgrund hoher Dichte an Schreib-/Lesegeräten R1, R2, R3, R4 zu Überreichweiten kommen. RFID-Transponder TR, die sich außerhalb des gewünschten Erfassungsbereichs befinden, werden in Folge der Überreichweiten dennoch erfasst und führen in einem Produktionsablauf zu Störungen oder sogar zu Schäden. Wenn Daten über die korrekten Erfassungen eines im Produktionsablauf vorangehenden Schreib-/Lesegerätes über die Luftschnittstelle zu den nachfolgenden Schreib-/Lesegeräten R1, R2, R3, R4 übermittelt werden, kann eine Liste der zu erwartenden Transponder TR aufgebaut werden. Bei nachfolgenden Abweichungen der empfangenen Transponder TR von den Einträgen dieser Liste können Algorithmen zur Reaktion auf Überreichweiten angewendet werden, um die Betriebsparameter der beteiligten Schreib-/Lesegeräten R1, R2, R3, R4 entsprechend anzupassen. Auch Meldungen an einen Benutzer können selbstverständlich ausgegeben werden. Eine weitere Möglichkeit zur Behandlung von Überreichweiten ist bereits kurz diskutiert worden, wobei ein Vergleich der Funkeigenschaften bei der Kommunikation mit einem Transponder TR bei den verschiedenen Erfassungen der unterschiedlichen Schreib-/Lesegeräte R1, R2, R3, R4 vorgenommen wird. Dazu bauen mehre Schreib-/Lesegeräten R1, R2, R3, R4 eine Funkkommunikation zu demselben Transponder TR auf. Dasjenige der Schreib-/Lesegeräte R1, R2, R3, R4, das bei der Kommunikation mit dem betreffenden Transponder TR die beste Qualität (RSSI-Wert, stabile Erkennung, usw.) erkennt, befindet sich zumindest im Sinne des Funkweges am nächsten an dem betreffenden Transponder TR. Durch Austausch dieser Information untereinander können die beteiligten Schreib-/Lesegeräte R1, R2, R3, R4 somit feststellen, ob es sich bei dem Transponder TR um eine "Überreichweite" handelt, oder nicht. Ein dritter wichtiger Anwendungsfall wurde bereits anhand der Übertragung von Betriebsparametern von einem Schreib-/Lesegerät zu einem anderen beschrieben und kann auch als "Reader Cloning" bezeichnet werden. Damit können einmal ermittelte und bestätigte Betriebsparameter auf einfache Weise von einem Gerät zum anderen kopiert werden, insbesondere dann, wenn die verschiedenen Lesestellen gleichartig aufgebaut sind.

## Patentansprüche

1. Verfahren zur Konfigurierung eines Schreib-/Lesegerätes (R1, R2, R3, R4) in einer RFID-Anordnung mit zumindest zwei Schreib-/Lesegeräten (R1, R2, R3, R4),
wobei zur Konfigurierung in zumindest einem der Schreib-/Lesegeräte (R1, R2, R3, R4) zumindest ein Betriebsparameter angepasst wird, und
wobei zwischen den zumindest zwei Schreib-/Lesegeräten (R1, R2, R3, R4) ein direkter Austausch von auf die Konfiguration bezogenen Nachrichten erfolgt,
**dadurch gekennzeichnet,**
**dass** zum Austausch der Nachrichten die jeweils für eine Kommunikation der Schreib-/Lesegeräte (R1, R2, R3, R4) mit RFID-Transpondern (TR) eingerichteten drahtlosen Schnittstellen und die für die Kommunikation mit RFID-Transpondern (TR) vorgesehenen Kommunikationsverfahren und Kommunikationsprotokolle verwendet werden, wobei zumindest eines der Schreib-/Lesegeräte (R1, R2, R3, R4) gegenüber einem anderen der Schreib-/Lesegeräte (R1, R2, R3, R4) einen RFID-Transponder (TR) simuliert,
wobei durch das zumindest eine Schreib-/Lesegerät (R1, R2, R3, R4) eine modulierte Rückstreuung eines von dem anderen der Schreib-/Lesegeräte (R1, R2, R3, R4) ausgesendeten modulierten Trägersignals erfolgt.

2. Verfahren nach Patentanspruch 1,
**dadurch gekennzeichnet,**
**dass** bei der Konfigurierung von einem ersten der Schreib-/Lesegeräte (R1, R2, R3, R4) mittels Nachrichten eine Information über zumindest einen der im Funkbereich dieses Schreib-/Lesegerätes (R1, R2, R3, R4) erfassten RFID-Transponder (TR) und Daten über die jeweilige bei dessen oder deren Erfassung gemessenen Empfangsqualität zu einem zweiten der Schreib-/Lesegeräte (R1, R2, R3, R4) übermittelt wird, wobei durch das zweite Schreib-/Lesegerät in den Fällen, in denen ein RFID-Transponder (TR) im Funkbereich mehrerer der Schreib-/Lesegeräte (R1, R2, R3, R4) erfassbar ist, eine Entscheidung darüber getroffen wird, welches der Schreib-/Lesegeräte (R1, R2, R3, R4) zum Datenaustausch mit diesem RFID-Transponder (TR) oder zur Meldung dieses RFID-Transponders (TR) an eine Anwendung (AW) der RFID-Anordnung vorgesehen wird.

3. Verfahren nach Patentanspruch 2,
**dadurch gekennzeichnet,**
**dass** die Entscheidung anhand des Vergleichs der auf den jeweiligen RFID-Transponder (TR) bezogenen Daten über die Empfangsqualität in den Funkbereichen von mindestens zwei der Schreib-/Lesegeräte (R1, R2, R3, R4) jeweils getroffen wird.

4. Verfahren nach einem der vorhergehenden Patentansprüche,
**dadurch gekennzeichnet,**
**dass** bei der Konfigurierung die von einem ersten der Schreib-/Lesegeräte (R1, R2, R3, R4) erfasste Empfangsqualität einer Aussendung eines zweiten der Schreib-/Lesegeräte (R1, R2, R3, R4) zur Anpassung zumindest eines Betriebsparameters zumindest eines der Schreib-/Lesegeräte (R1, R2, R3, R4) verwendet wird.

5. Verfahren nach Patentanspruch 4,
**dadurch gekennzeichnet,**
**dass** der angepasste Wert für den Betriebsparameter von dem ersten der Schreib-/Lesegeräte (R1, R2, R3, R4) bestimmt, mittels einer Nachricht zu dem zweiten der Schreib-/Lesegeräte (R1, R2, R3, R4) übermittelt und dort angewendet wird.

6. Verfahren nach Patentanspruch 4,
**dadurch gekennzeichnet,**
**dass** die Daten über die erfasste Empfangsqualität mittels einer Nachricht von dem ersten zu dem zweiten der Schreib-/Lesegeräte (R1, R2, R3, R4) übertragen, von dem zweiten der Schreib-/Lesegeräte (R1, R2, R3, R4) ausgewertet und zur Bestimmung oder Korrektur zumindest eines lokalen Betriebsparameters verwendet wird.

7. Verfahren nach einem der vorhergehenden Patentansprüche,
**dadurch gekennzeichnet,**
**dass** als anzupassender Betriebsparameter eine maximale oder eine zu verwendende Sendeleistung, zumindest ein zu verwendender oder ein zu sperrender Funkkanal, und/oder eine Eingangsempfindlichkeit eines Empfängers verwendet wird.

8. Verfahren nach einem der vorhergehenden Patentansprüche,
**dadurch gekennzeichnet,**
**dass** als die Betriebsparameter Filterparameter für einen Filteralgorithmus zur Selektion oder zur Verwerfung erfasster RFID-Transponder (TR) verwendet werden.

9. Verfahren nach einem der vorhergehenden Patentansprüche,
**dadurch gekennzeichnet,**
**dass** mit den Nachrichten zumindest ein von einem ersten der Schreib-/Lesegeräte (R1, R2, R3, R4) erfasster RFID-Transponder (TR) an ein zweites der Schreib-/Lesegeräte (R1, R2, R3, R4) gemeldet wird, wobei dieser RFID-Transponder (TR) von dem zweiten der Schreib-/Lesegeräte (R1, R2, R3, R4) an eine mit dem zweiten Schreib-/Lesegerät kommunikativ verknüpfte Anwendung (AW) weitergemeldet wird.

10. Verfahren nach Patentanspruch 9,
**dadurch gekennzeichnet,**
**dass** bei der Weitermeldung des zumindest einen von dem ersten Schreib-/Lesegerät erfassten RFID-Transponders (TR) von dem zweiten der Schreib-/Lesegeräte (R1, R2, R3, R4) eine Angabe darüber weitergemeldet wird, welches oder welche der Schreib-/Lesegeräte (R1, R2, R3, R4) der RFID-Anordnung den gemeldeten RFID-Transponder (TR) erfasst hat.

11. Verfahren nach einem der vorhergehenden Patentansprüche,
**dadurch gekennzeichnet,**
**dass** mit den Nachrichten mehrere oder alle Konfigurationsdaten von einem ersten zu einem zweiten der Schreib-/Lesegeräte (R1, R2, R3, R4) kopiert und dort angewendet werden.

12. Schreib-/Lesegerät für eine RFID-Anordnung,
wobei das Schreib-/Lesegerät zum Austausch auf eine Konfigurierung eines Schreib-/Lesegerätes (R1, R2, R3, R4) bezogene Nachrichten mit einem weiteren Schreib-/Lesegerät der RFID-Anordnung eingerichtet ist,
**dadurch gekennzeichnet,**
**dass** das Schreib-/Lesegerät zum Austausch der Nachrichten mittels einer für die Kommunikation mit RFID-Transpondern (TR) eingerichteten drahtlosen Schnittstelle unter Verwendung der für eine Kommunikation mit RFID-Transpondern (TR) vorgesehenen Kommunikations-Verfahren und Kommunikationsprotokolle eingerichtet ist, wobei das Schreib-/Lesegerät zur Simulation eines RFID-Transponders (TR) gegenüber dem weiteren der Schreib-/Lesegeräte (R1, R2, R3, R4) ausgebildet ist,
wobei das Schreib-/Lesegerät zur modulierten Rückstreuung eines von dem weiteren der Schreib-/Lesegeräte (R1, R2, R3, R4) ausgesendeten modulierten Trägersignals ausgebildet ist.

## Claims

1. Method for configuring a read/write unit (R1, R2, R3, R4) in an RFID arrangement having at least two read/write units (R1, R2, R3, R4),
wherein at least one operating parameter is adjusted for the configuration in at least one of the read/write units (R1, R2, R3, R4), and
wherein direct interchange of messages relating to the configuration takes place between the at least two read/write units (R1, R2, R3, R4),
**characterized**
**in that** the respective wireless interfaces that are set up for communication by the read/write units (R1, R2, R3, R4) with RFID transponders (TR) and the communication methods and communication protocols that are provided for the communication with RFID transponders (TR) are used for the interchange of the messages, at least one of the read/write units (R1, R2, R3, R4) simulating an RFID transponder (TR) to another of the read/write units (R1, R2, R3, R4),
wherein the at least one read/write unit (R1, R2, R3, R4) effects modulated backscatter of a modulated carrier signal that is transmitted by the other instance of the read/write units (R1, R2, R3, R4).

2. Method according to Patent Claim 1,
**characterized**
**in that** the configuration of a first of the read/write units (R1, R2, R3, R4) involves the use of messages to transmit a piece of information about at least one of the RFID transponders (TR) detected in the radio range of this read/write unit (R1, R2, R3, R4) and data about the respective reception quality measured during the detection of said RFID transponder or transponders to a second of the read/write units (R1, R2, R3, R4), wherein the second read/write unit, in those cases in which an RFID transponder (TR) can be detected in the radio range of a plurality of the read/write units (R1, R2, R3, R4), makes a decision about which of the read/write units (R1, R2, R3, R4) is provided for the data interchange with this RFID transponder (TR) or for reporting this RFID transponder (TR) to an application (AW) of the RFID arrangement.

3. Method according to Patent Claim 2,
**characterized**
**in that** the decision is respectively made using the comparison of the data relating to the respective RFID transponder (TR) about the reception quality in the radio ranges of at least two of read/write units (R1, R2, R3, R4).

4. Method according to one of the preceding patent claims,
**characterized**
**in that** the configuration involves the reception quality of a transmission by a second of the read/write units (R1, R2, R3, R4), which reception quality is detected by a first of the read/write units (R1, R2, R3, R4), being used to adjust at least one operating parameter of at least one of the read/write units (R1, R2, R3, R4).

5. Method according to Patent Claim 4,
**characterized**
**in that** the adjusted value for the operating parameter is determined by the first of the read/write units (R1, R2, R3, R4), is transmitted to the second of the read/write units (R1, R2, R3, R4) by means of a message and is applied in said second read/write unit.

6. Method according to Patent Claim 4,
**characterized**
**in that** the data about the detected reception quality are transmitted from the first to the second of the read/write units (R1, R2, R3, R4) by means of a message, are evaluated by the second of the read/write units (R1, R2, R3, R4) and are used for determining or correcting at least one local operating parameter.

7. Method according to one of the preceding patent claims,
**characterized**
**in that** the operating parameter to be adjusted that is used is a maximum transmission power or a transmission power that is to be used, at least one radio channel that is to be used or a radio channel that is to be closed, and/or a reception sensitivity of a receiver.

8. Method according to one of the preceding patent claims,
**characterized**
**in that** the operating parameters used are filter parameters for a filter algorithm for selecting or rejecting detected RFID transponders (TR).

9. Method according to one of the preceding patent claims,
**characterized**
**in that** the messages are used to report at least one RFID transponder (TR) detected by a first of the read/write units (R1, R2, R3, R4) to a second of the read/write units (R1, R2, R3, R4), this RFID transponder (TR) being reported onward by the second of the read/write units (R1, R2, R3, R4) to an application (AW) that is communicatively linked to the second read/write unit.

10. Method according to Patent Claim 9,
**characterized**
**in that** the reporting onward of the at least one RFID transponder (TR) detected by the first read/write unit by the second of the read/write units (R1, R2, R3, R4) involves the reporting onward of a statement about which of the read/write units (R1, R2, R3, R4) of the RFID arrangement has or have detected the reported RFID transponder (TR).

11. Method according to one of the preceding patent claims,
**characterized**
**in that** the messages are used to copy a plurality of or all configuration data from a first to a second of the read/write units (R1, R2, R3, R4) and to apply them therein.

12. Read/write unit for an RFID arrangement,
wherein the read/write unit is set up to interchange messages relating to a configuration of a read/write unit (R1, R2, R3, R4) with a further read/write unit of the RFID arrangement, **characterized**
**in that** the read/write unit is set up to interchange the messages by means of a wireless interface, which is set up for the communication with RFID transponders (TR), using the communication methods and communication protocols that are provided for communication with RFID transponders (TR), the read/write unit being designed to simulate an RFID transponder (TR) to the further instance of the read/write units (R1, R2, R3, R4),
wherein the read/write unit is designed for the modulated backscatter of a modulated carrier signal that is transmitted by the further instance of the read/write units (R1, R2, R3, R4) .

## Revendications

1. Procédé de configuration d'un appareil ( R1, R2, R3, R4 ) d'écriture/lecture dans un agencement RFID ayant au moins deux appareils ( R1, R2, R3, R4 ) d'écriture/lecture,
dans lequel, pour la configuration, on adapte au moins un paramètre de fonctionnement dans au moins l'un des appareils ( R1, R2, R3, R4 ) d'écriture/lecture et
dans lequel il s'effectue, entre les au moins deux appareils ( R1, R2, R3, R4 ) d'écriture/lecture, un échange direct de messages se rapportant à la configuration,
**caractérisé**
**en ce que** pour l'échange des messages, on utilise les interfaces sans fil installées pour une communication des appareils ( R1, R2, R3, R4 ) d'écriture/lecture avec des transpondeurs ( TR ) RFID et les procédés de communication et protocoles de communication prévus pour la communication avec des transpondeurs ( TR ) RFID, dans lequel au moins l'un des appareils ( R1, R2, R3, R4 ) d'écriture/lecture simule un transpondeur ( TR ) RFID par rapport à un autre des appareils ( R1, R2, R3, R4 ) d'écriture/lecture,
dans lequel une rétrodiffusion modulée d'un signal porteur modulé, émise par l'autre appareil ( R1, R2, R3, R4 ) d'écriture/lecture, s'effectue par le au moins un appareil ( R1, R2, R3, R4 ) d'écriture/lecture.

2. Procédé suivant la revendication 1,
**caractérisé**
**en ce que**, lors de la configuration, on transmet d'un premier des appareils ( R1, R2, R3, R4 ) d'écriture/lecture, au moyen de messages, une information sur au moins l'un des transpondeurs ( TR ) RFID détecté dans le domaine radio de cet appareil ( R1, R2, R3, R4 ) d'écriture/lecture et des données sur la qualité de réception mesurée à sa ou à ses détections, à un deuxième appareil ( R1, R2, R3, R4 ) d'écriture/lecture, dans lequel il peut être décidé, par le deuxième appareil d'écriture/lecture, dans les cas dans lesquels un transpondeur ( TR ) RFID peut être détecté dans le domaine radio de plusieurs des appareils ( R1, R2, R3, R4 ) d'écriture/lecture, celui des appareils ( R1, R2, R3, R4 ) d'écriture/lecture prévu pour l'échange de données avec ce transpondeur ( TR ) RFID ou pour la signalisation de ce transpondeur ( TR ) RFID à une application ( AW ) de l'agencement RFID.

3. Procédé suivant la revendication 2,
**caractérisé**
**en ce que** la décision est prise, à l'aide de la comparaison des données se rapportant au transpondeur ( TR ) RFID respectif, sur la qualité de réception dans les domaines radio d'au moins deux des appareils ( R1, R2, R3, R4 ) d'écriture/lecture.

4. Procédé suivant l'une des revendications précédentes,
**caractérisé**
**en ce que**, lors de la configuration, on utilise la qualité de réception détectée par un premier appareil ( R1, R2, R3, R4 ) d'écriture/lecture d'une émission d'un deuxième appareil ( R1, R2, R3, R4 ) d'écriture/lecture, pour adapter au moins un paramètre de fonctionnement d'au moins l'un des appareils ( R1, R2, R3, R4 ) d'écriture/lecture.

5. Procédé suivant la revendication 4,
**caractérisé**
**en ce que** l'on détermine la valeur adaptée du paramètre de fonctionnement par le premier appareil ( R1, R2, R3, R4 ) d'écriture/lecture, on la transmet au moyen d'un message au deuxième appareil ( R1, R2, R3, R4 ) d'écriture/lecture et on l'y applique.

6. Procédé suivant la revendication 4,
**caractérisé**
**en ce que** l'on transmet les données sur la qualité de réception détectée au moyen d'un message du premier au deuxième appareil ( R1, R2, R3, R4 ) d'écriture/lecture, on les exploite par le deuxième appareil ( R1, R2, R3, R4 ) d'écriture/lecture et on les utilise pour déterminer ou pour corriger au moins un paramètre de fonctionnement local.

7. Procédé suivant l'une des revendications précédentes,
**caractérisé**
**en ce que** l'on utilise, comme paramètre de fonctionnement adapté, une puissance d'émission maximum ou une puissance d'émission à utiliser, au moins un canal radio à utiliser ou à bloquer et/ou une sensibilité d'entrée d'un récepteur.

8. Procédé suivant l'une des revendications précédentes,
**caractérisé**
**en ce que** l'on utilise, comme paramètre de fonctionnement, un paramètre de filtrage pour un algorithme de filtrage, en vue de sélectionner ou de rejeter un transpondeur ( TR ) RFID détecté.

9. Procédé suivant l'une des revendications précédentes,
**caractérisé**
**en ce que** l'on signale à un deuxième appareil ( R1, R2, R3, R4 ) d'écriture/lecture par les messages, au moins un transpondeur ( TR ) RFID détecté par un premier appareil ( R1, R2, R3, R4 ) d'écriture/lecture, dans lequel ce transpondeur ( TR ) RFID est signalé par le deuxième appareil ( R1, R2, R3, R4 ) d'écriture/lecture à une application ( AW ) reliée en communication au deuxième appareil d'écriture/lecture.

10. Procédé suivant la revendication 9,
**caractérisé**
**en ce que**, lors de la signalisation du au moins un transpondeur ( TR ) RFID détecté par le premier appareil d'écriture/lecture, il est signalé, par le deuxième appareil ( R1, R2, R3, R4 ) d'écriture/lecture, une indication sur le point de savoir celui ou ceux des appareils ( R1, R2, R3, R4 ) d'écriture/lecture de l'agencement RFID qui a détecté le transpondeur ( TR ) RFID signalé.

11. Procédé suivant l'une des revendications précédentes,
**caractérisé**
**en ce que** l'on copie, par les messages, plusieurs ou toutes les données de configuration d'un premier à un deuxième appareil ( R1, R2, R3, R4 ) d'écriture/lecture et on les y applique.

12. Appareil d'écriture/lecture pour un agencement RFID,
dans lequel l'appareil d'écriture/lecture est conçu pour l'échange de messages se rapportant à une configuration d'un appareil ( R1, R2, R3, R4 ) d'écriture/lecture avec un autre appareil d'écriture/lecture de l'agencement RFID,
**caractérisé**
**en ce que** l'appareil d'écriture/lecture est conçu pour l'échange de messages, au moyen d'une interface sans fil conçue pour la communication avec des transpondeurs ( TR ) RFID, en utilisant les procédés de communication et les protocoles de communication prévus pour une communication avec des transpondeurs ( TR ) RFID, l'appareil d'écriture/lecture étant constitué pour simuler un transpondeur ( TR ) RFID par rapport à l'autre appareil ( R1, R2, R3, R4 ) d'écriture/lecture, l'appareil d'écriture/lecture étant constitué pour la rétrodiffusion modulée d'un signal porteur modulé émis par l'autre appareil ( R1, R2, R3, R4 ) d'écriture/lecture.
